# EUROPEAN PATENT SPECIFICATION

(11) **EP 4 000 776 B1**
(45) Date of publication and mention of the grant of the patent: **29.10.2025**
(21) Application number: 20839765.3
(22) Date of filing: 17.07.2020
(51) Int. Cl.: C04B 35/5831, B23B 27/14, B23B 27/20

(54) **CUBIC BORON NITRIDE SINTERED COMPACT, AND CUTTING TOOL**
KUBISCHER SINTERPRESSLING AUS BORNITRID UND SCHNEIDWERKZEUG
CORPS FRITTÉ EN NITRURE DE BORE CUBIQUE, ET OUTIL DE COUPE

(30) Priority: 18.07.2019 JP 2019133022
(43) Date of publication of application: 25.05.2022
(73) Proprietor: SUMITOMO ELECTRIC INDUSTRIES, LTD., Osaka-shi, Osaka 541-0041 (JP); Sumitomo Electric Hardmetal Corp., Itami-shi, Hyogo 664-0016 (JP)
(72) Inventor: OKAMURA, Katsumi, Osaka-shi, Osaka 541-0041 (JP); ISHII, Akito, Osaka-shi, Osaka 541-0041 (JP); AMEMIYA, Mayu, Osaka-shi, Osaka 541-0041 (JP); MOROGUCHI, Hironari, Itami-shi, Hyogo 664-0016 (JP); KUKINO, Satoru, Itami-shi, Hyogo 664-0016 (JP)
(74) Representative: Boult Wade Tennant LLP
(86) International application number: PCT/JP2020/027898
(87) International publication number: WO 2021/010471

(56) References cited:
- EP-A1- 0 598 140
- EP-A1- 3 088 126
- EP-A2- 2 613 900
- JP-A- 2006 169 080
- JP-A- 2007 070 148
- JP-A- 2013 234 237
- JP-A- 2019 065 513
- JP-A- S61 141 672

## Description

### TECHNICAL FIELD

The present disclosure relates to a cubic boron nitride sintered material and a cutting tool. The present application claims a priority based on Japanese Patent Application No. 2019-133022 filed on July 18, 2019.

### BACKGROUND ART

Japanese Patent Laying-Open No. 2018-145020 (PTL 1) discloses a cubic boron nitride sintered material. EP0598140A1 (PTL 2) discloses a cubic boron nitride-based sintered ceramics for cutting tool.

### CITATION LIST

### PATENT LITERATURE

PTL 1: Japanese Patent Laying-Open No. 2018-145020
PTL 2: EP0598140A1

### SUMMARY OF INVENTION

The cubic boron nitride sintered material of the present disclosure comprises cubic boron nitride particles and a binding phase.

The cubic boron nitride particles account for 20 vol% or more and 80 vol% or less in the cubic boron nitride sintered material. The volume percentage of the binding phase is, when the volume percentage of the cubic boron nitride sintered material is 100 vol%, a numerical value obtained by subtracting a volume percentage of the cubic boron nitride particles from the 100 vol%.

The binding phase includes a first region and a second region. The first region accounts for 1.0 vol% or more in the binding phase. A volume percentage of the second region is, when the volume percentage of the binding phase is 100 vol%, a numerical value obtained by subtracting a volume percentage of the first region from the 100 vol%.

The second region includes one or more components selected from the group consisting of compounds and solid solutions. Each of the compounds and the solid solutions includes a first element and a second element. The first element includes carbon and optionally one or more selected from the group consisting of nitrogen, boron, and oxygen. The second element is one or more selected from the group consisting of Group 4 elements, Group 5 elements, Group 6 elements, and aluminum in the periodic table.

The first region includes a plurality of needle crystals. Each of the plurality of needle crystals includes a boride. Each of the plurality of needle crystals has an aspect ratio of 1.5 or more in a cross-section image of the cubic boron nitride sintered material. The boride included in the plurality of needle crystals includes titanium. The boride included in the plurality of needle crystals further includes one or more selected from the group consisting of zirconium, niobium, molybdenum, hafnium, tantalum, and tungsten.

### BRIEF DESCRIPTION OF DRAWINGS

FIG. 1 is an example of a cross-section image of a cBN sintered material of the present embodiment.
FIG. 2 is a flow chart showing a method for producing a cBN sintered material of the present embodiment.
FIG. 3 is an example of a backscattered electron image of the cBN sintered material.
FIG. 4 is an image of the backscattered electron image of FIG. 3 read into an image processing software.
FIG. 5 is a figure describing a concentration profile graph.
FIG. 6 is a figure for describing a method for determining black regions and the binding phase.
FIG. 7 is a figure for describing the interface between black regions and the binding phase.
FIG. 8 is a binary image of the backscattered electron image of FIG. 3.

### DETAILED DESCRIPTION

### [Problem to be Solved by the Present Disclosure]

A cubic boron nitride (cBN) sintered material is used for a cutting tool. In the present description, a cutting tool including the cBN sintered material is also written as the "cBN tool."

The cBN tool is used for cutting work of a hardened steel. A hardened steel is used for, for example, automobile parts (gear, shaft, and bearing). The cBN tools for a hardened steel do not tend to have a stable life. That is, during a cutting work, a sudden defect may occur. Additionally, during a cutting work, the wear at the cutting face may rapidly progress. It is presumed because cutting resistance of a hardened steel is high. Conventionally, from a viewpoint of the life of the cBN tool, the cBN tool is often used at a cutting speed of, for example, 150 m/min or less during a cutting work of a hardened steel.

An object of the present disclosure is to enhance the life of the cBN tool.

### [Description of Embodiments]

First of all, the embodiments of the present disclosure are listed. The summery of the embodiments of the present disclosure is described herein.

A cubic boron nitride sintered material comprises cubic boron nitride particles and a binding phase.

The cubic boron nitride particles account for 20 vol% or more and 80 vol% or less in the cubic boron nitride sintered material. The volume percentage of the binding phase is, when the volume percentage of the cubic boron nitride sintered material is 100 vol%, a numerical value obtained by subtracting a volume percentage of the cubic boron nitride particles from the 100 vol%.

The binding phase includes a first region and a second region. The first region accounts for 1.0 vol% or more in the binding phase. A volume percentage of the second region is, when the volume percentage of the binding phase is 100 vol%, a numerical value obtained by subtracting a volume percentage of the first region from the 100 vol%,

The second region includes one or more components selected from the group consisting of compounds and solid solutions. Each of the compounds and the solid solutions includes a first element and a second element. The first element is one or more selected from the group consisting of nitrogen, carbon, boron, and oxygen. The second element is one or more selected from the group consisting of Group 4 elements, Group 5 elements, Group 6 elements, and aluminum in the periodic table.

The first region includes a plurality of needle crystals. Each of the plurality of needle crystals includes a boride. Each of the plurality of needle crystals has an aspect ratio of 1.5 or more in a cross-section image of the cubic boron nitride sintered material.

Conventionally, the binding phase of the cBN sintered material includes ceramics particles. Ceramics particles, that are very reactive, tend to grow spherically during sintering. That is, conventionally, the binding phase includes spherical crystals.

The binding phase of the present disclosure includes needle crystals. A needle crystal includes a boride. A needle crystal has an aspect ratio of 1.5 or more in a cross-section image of the binding phase.

For example, cracks that occur during a cutting work of a hardened steel tend to spread in the binding phase while avoiding cBN particles. According to the new findings of the present disclosure, needle crystals may prevent cracks from spreading in the binding phase. As a result, the life of the cBN tool may be enhanced.

In the plurality of needle crystals, an average value of the aspect ratios may be 3.0 or more and 10.0 or less. It is because the life of the cBN tool may be further enhanced.

The first region may account for 3 vol% or more and 10 vol% or less in the binding phase. It is because the life of the cBN tool may be further enhanced.

The cubic boron nitride particles may account for 35 vol% or more and less than 75 vol% in the cubic boron nitride sintered material. It is because the life of the cBN tool may be further enhanced.

The boride included in the plurality of needle crystals includes titanium. The boride included in the plurality of needle crystals further includes one or more selected from the group consisting of zirconium, niobium, molybdenum, hafnium, tantalum, and tungsten. It is because the life of the cBN tool may be further enhanced.

The cutting tool of the present disclosure comprises the cubic boron nitride sintered material disclosed above. The cutting tool of the present disclosure, that is, the cBN tool, may have the long life, for example, in the work of a hardened steel.

The cutting tool may be a coated cutting tool The coated cutting tool includes a covering film. The covering film covers at least a part of the surface of the cubic boron nitride sintered material.

### [Advantageous Effect of the Present Disclosure]

According to the present disclosure, the life of the cBN tool may be enhanced.

### [Detailed Description of Embodiments]

Hereinafter, the embodiments of the present disclosure (also written as the "present embodiment" in the present description) will be described. However, the following descriptions do not intend to limit the scope of claims.

### <cBN Sintered material>

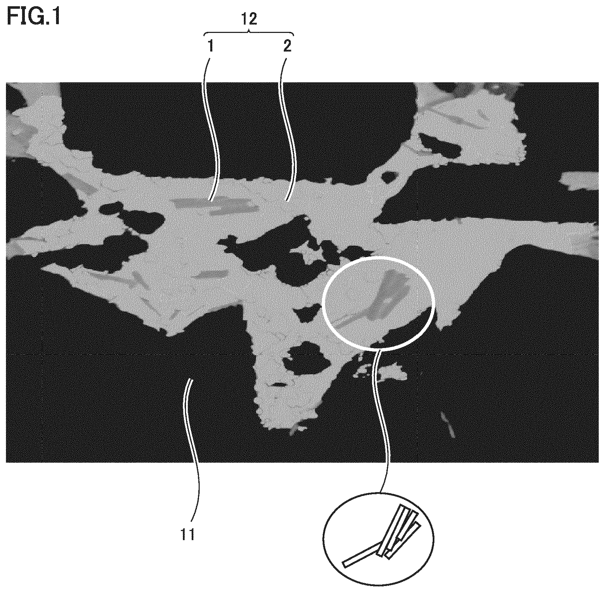

FIG. 1 is an example of a cross-section image of the cBN sintered material of the present embodiment.

The cubic boron nitride (cBN) sintered material comprises cubic boron nitride (cBN) particles 11 and a binding phase 12. The cBN sintered material may consist essentially of cBN particles 11 and binding phase 12.

The acquisition procedure of a cross-section image in the present embodiment is as follows.

A cross-section sample of the cBN sintered material is prepared by CP (cross section polisher) process. An ion bean, for example, is used for the CP process. An image of the CP processed surface (cross-section) is taken by SEM (scanning electron microscope) in the backscattered electron mode. The acceleration voltage when taking an image may be, for example, 2kV. The acceleration voltage may be changed in accordance with, for example, the composition of binding phase 12. When the composition analysis of binding phase 12 is intended, the observation magnification when taking an image may be, for example, about 30000 times. The observation magnification may be changed in accordance with, for example, the size of binding phase 12. In a backscattered electron image, the lighter an element, the darker an image tends to appear. For this reason, approximate composition distributions may be understood by the shadings of an image.

### <<cBN particles>>

The black regions in the cross-section image of FIG. 1 are cBN particles 11. cBN particles 11 include cBN. cBN particles 11 may include, for example, a small amount of impurities. cBN particles 11 may include a small amount of, for example, wurtzite boron nitride (wBN). cBN particles 11 may consist essentially of cBN.

cBN particles 11 account for 20 vol% or more and 80 vol% or less in the cBN sintered material. The higher the volume percentage of cBN particles 11, the defect resistance tends to be enhanced. On the other hand, the higher the volume percentage of cBN particles 11, the wear resistance tends to be reduced. When a volume percentage of cBN particles 11 is less than 20 vol%, a sufficient life cannot be expected. It is presumed because the defect resistance is low. A volume percentage of cBN particles 11 of more than 80 vol% cannot be expected to impart a sufficient life. It is presumed because the wear resistance is low. The method for measuring a volume percentage will be described later.

cBN particles 11 may account for 35 vol% or more and less than 75 vol% in the cBN sintered material. When cBN particles 11 are in the range from 35 vol% or more and less than 75 vol%, the defect resistance and the wear resistance tend to be in good balance. cBN particles 11 may account for, for example, 35 vol% or more and 73 vol% or less in the cBN sintered material. cBN particles 11 may account for, for example, 50 vol% or more and 70 vol% or less in the cBN sintered material.

cBN particles 11 may have an average particle size of, for example, 0.1 µm or more and 10 µm or less. cBN particles 11 may have an average particle size of, for example, 1 µm or more and 5 µm or less. The "particle size of cBN particles 11" refers to the equivalent circle diameter of cBN particles 11 in the cross-section image of the cBN sintered material. The "average particle size of cBN particles 11" is, for example, an arithmetic average of the particle sizes of 10 or more cBN particles 11. The 10 or more cBN particles 11 are randomly extracted from the cross-section image of the cBN sintered material.

### (Method for measuring volume percentage, and binarization)

The volume percentage of cBN particles may be measured by SEM. For example, the JEOL "JSM-7800F" and the like may be used. Any devices that have the equivalent functions to this device may be used.

The method for measuring the volume percentage of cBN particles is as follows.

In the same manner as above, a cross-section sample of the cBN sintered material is prepared by, for example, the CP process. The cross-section sample is observed by SEM in the backscattered electron mode. Due to this, a backscattered electron image may be obtained. When the measurement of a volume percentage of cBN particles is intended, the observation magnification may be, for example, about 5000 times. In the backscattered electron image, regions where cBN particles are present appear as black regions, whereas regions where the binding phase is present appear as gray regions or white regions.

Then, the backscattered electron image is binarized using an image analysis software ("WinROOF" manufactured by MITANI CORPORATION). From the binarized image, an area percentage of pixels derived from the dark fields (pixels derived from cBN particles) accounting for the area of the perimetry is calculated. The calculated area percentage is regarded as the volume percentage of cBN particles.

For example, from the binarized image, a volume percentage of the binding phase may be calculated by calculating an area percentage of pixels derived from the bright fields (pixels derived from the binding phase) accounting for the area of the perimetry.

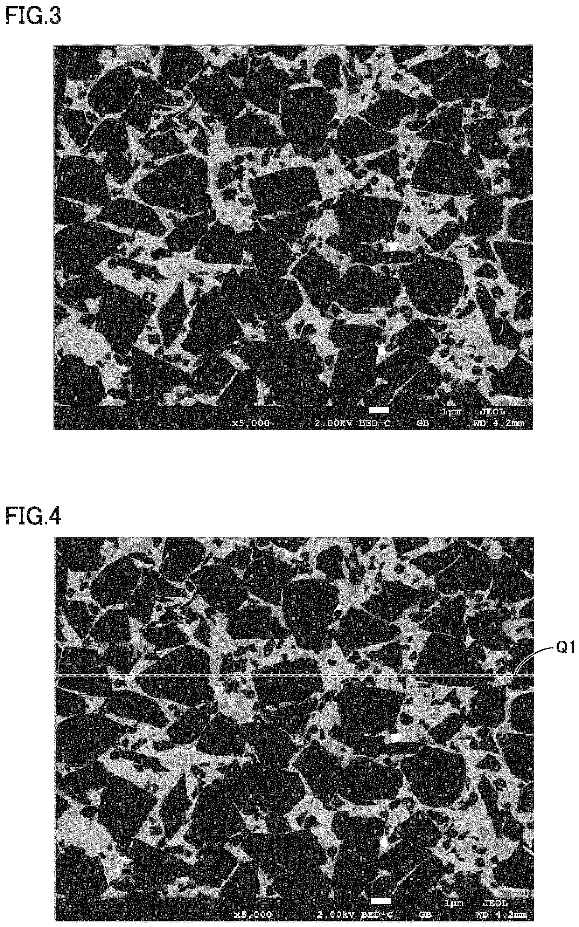

A specific binarization method is described with reference to FIG. 3 to FIG. 8.

FIG. 3 is an example of a backscattered electron image of the cBN sintered material. The backscattered electron image is read into an image processing software. The image read into is shown in FIG. 4. As shown in FIG. 4, an arbitrary line Q1 is set in the image that has been read into.

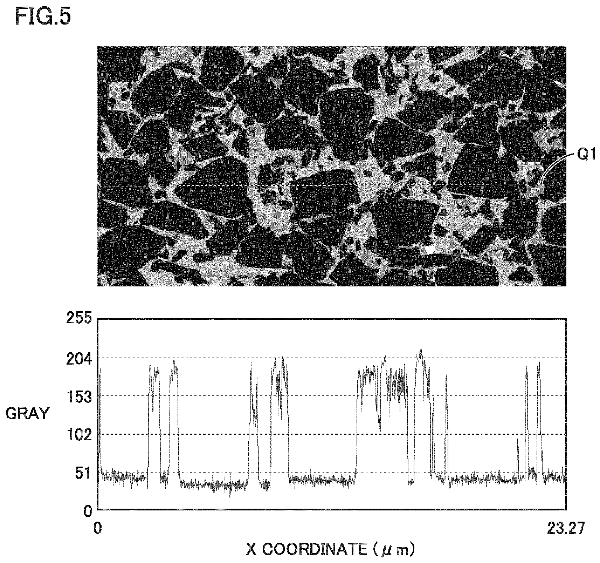

When a concentration is measured along with line Q1, a GRAY scale is read out. A graph is created with line Q1 as an X coordinate and the GRAY scale as a Y coordinate (hereinafter, also written as the "concentration profile graph".) FIG. 5 shows the backscattered electron image of the cBN sintered material and a concentration profile graph of the backscattered electron image. In FIG. 5, the upper image is the backscattered electron image, and the lower graph is the concentration profile graph. In FIG. 5, the width of the backscattered electron image corresponds to the width of the X coordinate (23.27 µm) in the concentration profile graph. Accordingly, the distance from the left end of line Q1 to a specific position on line Q1 in the backscattered electron image is shown in the value of the X coordinate of the concentration profile graph.

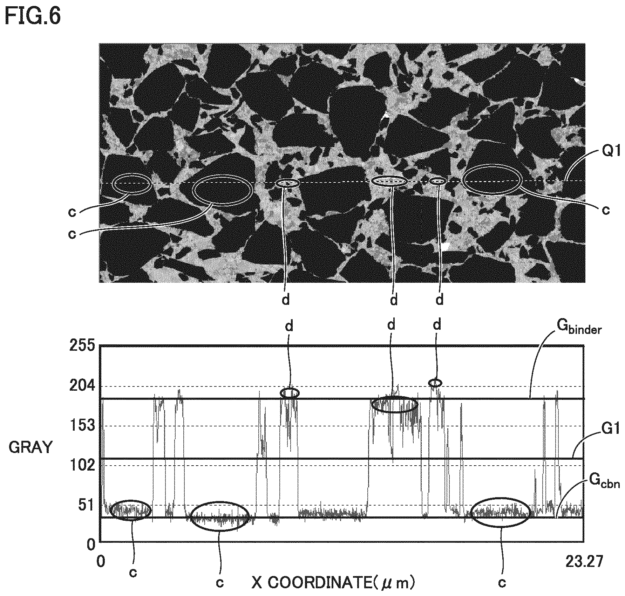

Three places are arbitrarily selected from the black regions where cBN particles are present in the backscattered electron image of FIG. 5. The black regions, for example, are the parts shown in the ovals with a sign c in the backscattered electron image of FIG. 6.

Each GRAY scale at the 3 places of the black regions is read out from the concentration profile graph. Each GRAY scale at the 3 places of the black regions is defined as the average value of GRAY scales of each of the 3 places surrounded by the ovals with a sign c in the concentration profile graph of FIG. 6. An average value of the GRAY scales at the 3 respective places is calculated. Such an average value is defined as the GRAY scale of cBN (hereinafter, also written as the "G_{cbn}".)

Three places are arbitrarily selected from the regions shown in gray where the binding phase is present in the backscattered electron image of FIG. 5. The binding phase, for example, is the parts shown in the ovals with a sign d in the backscattered electron image of FIG. 6.

Each GRAY scale at the 3 places of the binding phase is read out from the concentration profile graph. Each GRAY scale at the 3 places of the binding phase is defined as the average value of GRAY scales of each of the 3 places surrounded by the ovals with a sign d in the concentration profile graph of FIG. 6. An average value of the GRAY scales at the 3 respective places is calculated. Such an average value is defined as the GRAY scale of the binding phase (hereinafter, also written as the "G_{binder}".)

The GRAY scale represented by (G_{cbn}+G_{binder})/2 is determined as the GRAY scale at the interface between the black regions (cBN particles) and the binding phase. For example, the GRAY scale G_{cbn} of the black regions (cBN particles) is represented by line G_{cbn} in the concentration profile graph of FIG. 6. The GRAY scale G_{binder} of the binding phase is represented by line G_{binder}. The GRAY scale represented by (G_{cbn}+G_{binder})/2 is shown by line G1.

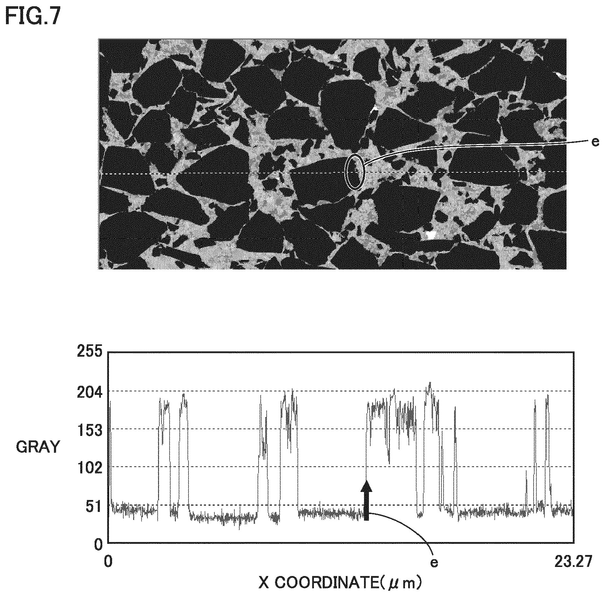

As described above, when the interface between the black regions (cBN particles) and the binding phase is determined in the concentration profile graph, the value of X coordinate and Y coordinate at the interface between the black regions (cBN particles) and the binding phase is read out. In the backscattered electron image of FIG. 7, the interface between the black regions (cBN particles) and the binding phase is the part shown in the oval with a sign e. In the concentration profile graph of FIG. 7, the interface between the black regions (cBN particles) and the binding phase is the part shown by the arrow e. The value of X coordinate and Y coordinate at the arrow e corresponds to the value of X coordinate and Y coordinate at the interface between the black region (cBN particles) and the binding phase. The interface may be set arbitrarily. In the example of FIG. 7, the part that includes the interface is shown in the oval e.

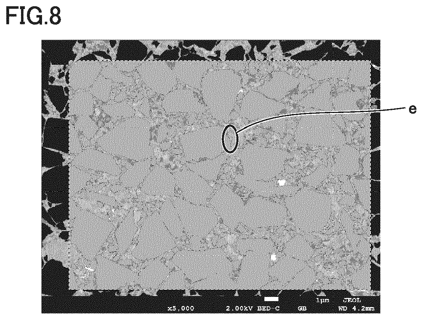

When the value of X coordinate and Y coordinate at the interface between the black region (cBN particles) and the binding phase is regarded as the threshold, the binarization is carried out. The binarized image is shown in FIG. 8. In FIG. 8, the area surrounded by a dotted line is the binarized region. In the binarized image, white regions are sometimes included in addition to the bright fields (gray regions) and the dark fields (black regions). The white regions are the regions shown in white in the pre-binarized image.

In FIG. 8, an area percentage of pixels derived from the dark fields (pixels derived from cBN particles) accounting for the area of the perimetry is calculated. The calculated area percentage is regarded as the volume percentage of cBN particles.

For example, in FIG. 8, a volume percentage of the binding phase may be calculated by calculating an area percentage of pixels derived from the bright fields (pixels derived from the binding phase) accounting for the area of the perimetry.

### <<Binding phase>>

The gray regions in the cross-section image of FIG. 1 are binding phase 12. Binding phase 12 binds cBN particles 11. In the cBN sintered material, binding phase 12 accounts for the balance of cBN particles 11. The volume percentage of binding phase 12 is, when the volume percentage of the cBN sintered material is 100 vol%, a numerical value obtained by subtracting a volume percentage of cBN particles 11 from the 100 vol%. That is, when cBN particles 11 account for, for example, 70 vol% in the cBN sintered material, binding phase 12 accounts for 30 vol% in the cBN sintered material. Binding phase 12 may account for 20 vol% or more and 80 vol% or less in the cBN sintered material.

Binding phase 12 consists of a plurality of regions. That is, binding phase 12 includes a first region a and a second region 2. The cross-section image of FIG. 1 is binarized. Details of the binarization is as mentioned above.

### (First region)

In the cross-section image of FIG. 1, first region 1 appears as darker gray when compared with second region 2. First region 1 includes a plurality of needle crystals. First region 1 may consist only of a plurality of needle crystals. Each of the needle crystals include a boride. The inclusion of a boride in each of the needle crystals may be specified by, for example, EDX (energy dispersive x-ray spectroscopy) that comes with SEM. For example, "Octane Elect EDS system" manufactured by AMETEK, Inc. may be used. Any devices that have the equivalent functions to this device may be used.

Needle crystals may prevent cracks from spreading in binding phase 12. As a result, it is presumed that the fracture toughness of the cBN sintered material may be enhanced. It is presumed that the reaction of the binding material (precursor of the binding phase) having a specific composition and cBN particles 11 during sintering generates needle crystals. However, details of the generation mechanism of needle crystals are still under investigation.

First region 1 accounts for 1.0 vol% or more in binding phase12. First region 1 may account for, for example, 30.0 vol% or less in binding phase 12. The "volume percentage of first region 1" is measured in a cross-section image of the cBN sintered material (for example, FIG. 1). First of all, as mentioned above, a cross-section image is binarized. Due to this, binding phase 12 is divided into first region 1 and second region 2 (other than first region 1). An area of binding phase 12 is measured. An area of first region 1 is measured. The area of first region 1 indicates the total area of individual needle crystals. An area percentage of first region 1 in the cross-section image is measured by dividing the area of first region 1 by the area of binding phase 12. In the present description, the area percentage of first region 1 in the cross-section image is regarded as the volume percentage of first region 1. The volume percentage of first region 1 is measured in, for example, 5 cross-section images. The arithmetic average of the 5 cross-section images is regarded as the "volume percentage of first region 1 to binding phase 12" in the cBN sintered material. Five cross-section images are taken at 5 randomly extracted places from the cBN sintered material, respectively.

When a volume percentage of first region 1 is less than 1.0%, a sufficient life cannot be expected. First region 1 may account for 3.0 vol% or more and 10.0 vol% or less in binding phase 12. When first region 1 has a volume percentage of 3.0 vol% or more and 10.0 vol% or less, the life of the cBN tool may be further enhanced. First region 1 may account for, for example, 5.1 vol% or more and 7.8 vol% or less in binding phase12. First region 1 may account for, for example, 6.2 vol% or more and 7.3 vol% or less in binding phase 12.

In the cross-section image of the cBN sintered material (FIG. 1), each of the needle crystals has an aspect ratio of 1.5 or more. The "aspect ratio" refers to the ratio of the major axis of a needle crystal to the minor axis of the needle crystal (major axis/minor axis). The major axis, in the cross-section image of a needle crystal, shows the distance between the two furthest points on the outer circumference of the needle crystal. The minor axis shows the maximum diameter of the diameters in the direction orthogonal to the major axis. The upper limit of the aspect ratio of a needle crystal should not be particularly limited. The upper limit of the aspect ratio of a needle crystal may be, for example, 30. In the present embodiment, a substance having an aspect ratio of less than 1.5 belongs to second region 2.

In a plurality of needle crystals (substances having an aspect ratio of 1.5 or more), the average value of the aspect ratios may be 3.0 or more and 10.0 or less. When an average value of the aspect ratios is 3.0 or more and 10.0 or less, the life of the cBN tool may be further enhanced. The average value of the aspect ratios is an arithmetic average of the aspect ratios of needle crystals included within, for example, 5 cross-section images.

Each of the plurality of needle crystals includes a boride. Each of the plurality of needle crystals may substantially include only a boride. The composition of a boride may be specified by XRD (x-ray diffraction) and EDX.

It is presumed that a boride includes a component derived from cBN particles and a component derived from a binding material (precursor of the binding phase.) The boride includes titanium (Ti). The boride may also include, for example, TiB₂.

The boride, in addition to Ti, further includes one or more selected from the group consisting of, for example, zirconium (Zr), niobium (Nb), molybdenum (Mo), hafnium (Hf), tantalum (Ta), and tungsten (W). When elements such as Nb is included in addition to Ti, the life of the cBN tool may be further enhanced. The boride may include Ti and Nb. When Nb in included in the boride, a particularly long life may be expected.

Elements such as Nb may be dissolved in the boride. Elements such as Nb may be diffused inside the boride. Elements such as Nb may be homogeneously distributed inside the boride. Elements such as Nb may be non-homogeneously distributed inside the boride. Nb and the like may be combined with the boron.

The boride may be represented by, for example, "formula (I):(TiM)B₂." In formula (I), M is one or more selected from the group consisting of Zr, Nb, Mo, Hf, Ta, and W. Further, in formula (I), the total of the atomic ratios in the parentheses is 1. That is, the total of an atomic ratio of Ti and an atomic ratio of M is 1.

The boride may include one or more selected from the group consisting of, for example, (TiZr)B₂, (TiNb)B₂, (TiMo)B₂, (TiNbZr)B₂, (TiHf)B₂, (TiTa)B₂, and (TiW)B₂.

The boride may include, for example, a small amount of aluminum (Al). For example, a small amount of Al may be dissolved in the boride.

The composition formulae in the present description should not be limited only to the atomic ratios shown therein. The composition formula should be understood to include various conventionally known atomic ratios. The composition formula should be understood to include, for example, non-stoichiometric ratios. For example, the atomic ratio of Ti, C, and N in "TiCN" is not limited to "Ti:C:N = 1:0.5:0.5." Further, the composition formulae in the present description not only show the composition of a compound but also show the composition of a solid solution. The solid solution may be an interstitial solid solution or may be a substitutional solid solution.

In the present description, the case where parentheses are used in a composition formula such as "(TiNb)B₂" indicates that the total of the atomic ratios in the parentheses is 1.

On the other hand, the case where no parentheses are used in a composition formula such as "TiNbCN" indicates that the total of an atomic ratio of Ti and an atomic ratio of Nb is not necessarily 1. Similarly, the total of an atomic ratio of C and an atomic ratio of N is not necessarily 1.

### (Second region)

Second region 2 accounts for the balance of first region 1 in binding phase 12. A volume percentage of second region 2 is, when the volume percentage of binding phase 12 is 100 vol%, a numerical value obtained by subtracting a volume percentage of first region 1 from the 100 vol%. That is, when first region 1 accounts for, for example, 10.0 vol% in binding phase 12, second region 2 accounts for 90.0 vol% in binding phase 12. Second region 2 may account for 30.0 vol% or more and 99.0 vol% or less in binding phase12.

Second region 2 includes one or more components. That is, second region 2 may substantially include only one component. Second region 2 may consist of two or more components. The components included in second region 2 includes one or more selected from the group consisting of compounds and solid solutions. That is, second region 2 includes one or more components selected from the group consisting of compounds and solid solutions. Second region 2 may consist essentially of compounds. Second region 2 may consist essentially of solid solutions. Second region 2 may also include both compounds and solid solutions. The components included in second region 2 may be specified by, for example, XRD and EDX.

Both compounds and solid solutions include a first element and a second element. The compounds and the solid solutions each independently include the first element and the second element. The combination of the first element and the second element included in the compound may be same as or different from the combination of the first element and the second element included in the solid solution. The first element is a nonmetal element. The first element includes carbon and optionally one or more selected from the group consisting of nitrogen (N), boron (B), and oxygen (O). That is, the compound and the solid solution may be a nitride, a carbide, a boride, or an oxide. The compound and the solid solution may be, for example, a carbonitride.

The second element is a metal element. The second element is one or more selected from the group consisting of Group 4 elements, Group 5 elements, Group 6 elements, and Al in the periodic table. Group 4 elements may be one or more selected from the group consisting of, for example, Ti, Zr, and Hf. Group 5 elements may be one or more selected from the group consisting of, for example, vanadium (V), Nb, and Ta. Group 6 elements may be one or more selected from the group consisting of, for example, chromium (Cr), Mo, and W.

Second region 2 may include one or more selected from the group consisting of, for example, TiCN, TiNbCN, TiZrCN, TiMoCN, TiNbZrCN, TiHfCN, TiTaCN, TiWCN, AlN, AlB₂, and Al₂O₃.

### <Method for producing the cBN sintered material>

The cBN sintered material of the present embodiment may be produced by, for example, the following production method.

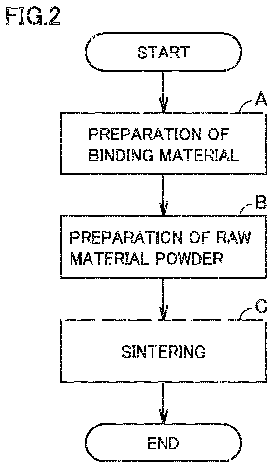

FIG. 2 is a flow chart showing the method for producing the cBN sintered material of the present embodiment. The method for producing the cBN sintered material of the present embodiment comprises "(A) preparation of a binding material", "(B) preparation of a raw material powder", and "(C) sintering."

In the present embodiment, a specific binding material is used so that needle crystals are generated. Further, the composition and the sintering conditions of the binding material control the generation amount of needle crystals and the shape of needle crystals (aspect ratio.)

### <<(A) Preparation of a binding material>>

In the present embodiment, a binding material is prepared by mixing a first material and a second material. The binding material is a precursor of binding phase 12.

The first material is the material that is going to be the main component of binding phase 12 later. The first material is also termed as "main binding material." The first material may include one or more selected from the group consisting of, for example, TiN and TiCN.

The second material is the component for binding the first material and cBN particles 11. The second material is also termed as the "sub binding material." Conventionally, for example, intermetallic compounds such as Ti, Al, TiAl, and TiAl₃ are used as the second material. Further, nitrides such as TiAlN has been conventionally used as the second material. It is confirmed that spherical crystals of a boride (for example, TiB₂) are generated by the reaction of the conventional second materials (intermetallic compounds, nitrides) and cBN particles 11.

In the present embodiment, for example, carbides such as Ti₂AlC and carbonitrides such as Ti₂AlCN are used as the second material. Herein, Ti₂AlC, Ti₂AlN, and Ti₂AlCN are also termed as the "MAX phase material." The MAX phase material may have, for example, a hexagonal crystal structure. The second material of the present embodiment (a carbide and a carbonitride) may have a decomposition temperature that is, for example, 300°C or higher than the conventional second materials (nitrides and the like.) For this reason, the reaction of the second material and cBN particles 11 of the present embodiment may presumably proceed at a higher temperature than before.

The higher a content of carbon, the higher a decomposition temperature of the MAX phase material tends to be. Ti₂AlN, that is the conventional second material, does not include carbon. It is presumed that Ti₂AlN decomposes at a low temperature and, after reacted to cBN, grows to spherical grains. In the present embodiment, Ti₂AlC and Ti₂AlCN are used as the second materials. Ti₂AlC and Ti₂AlCN include carbon. Ti₂AlC and Ti₂AlCN may have a high decomposition temperature. For this reason, Ti₂AlC and Ti₂AlCN may react to cBN while maintaining the hexagonal crystal structures. As a result, anisotropic crystal growth is facilitated and needle crystals are presumably generated. According to the new findings of the present disclosure, the shape (aspect ratio) of the needle crystals may be controlled by the composition, sintering conditions of the binding materials and the like.

Ti₂AlC, an example of the second material, may be prepared by, for example, the following procedure. For example, a Ti powder, an Al powder, and a TiC powder are mixed to thereby prepare a mixed powder. The mixing ratio is, for example, "Ti:Al:TiC = 39:20:41 (mass ratio)." For example, the mixed powder is heat-treated under a vacuum atmosphere. The heat treatment temperature may be, for example, about 1520°C. The heat treatment time may be, for example, about 30 minutes. This heat treatment may generate, for example, a single-phase compound of Ti₂AlC. Further, the average particle size of the single-phase compound is adjusted by, for example, the wet milling method.

It is presumed that the first material of the present embodiment is desirably less reactive to the second material. Further, it is presumed that the interdiffusion between the first material and the second material of the present embodiment is desirably less likely to be caused.

Conventionally, the first material and the second material may be both a nitride. As the composition of the first material is similar to the composition of the second material, it is presumed that the first material and the second material are prone to react. The Al compounds (AlN, Al₂O₃ and the like) included in binding phase 12 is presumably a reaction product of the first material and the second material.

Due to the low reactivity of the first material to the second material, the selective reaction of the second material to cBN particles 11 is expected to occur. When the selective reaction of the second material to cBN particles 11 occurs, the generation of needle crystals is expected to facilitate.

The first material may be represented by, for example, "formula (II):TiMCN." In the formula, M is one or more selected from the group consisting of Zr, Nb, Mo, Hf, Ta, and W.

For example, TiMCN is generated by forcing M to be dissolved in TiCN. As a result of the forced solid solution, it is presumed that TiMCN has the distorted crystal structure. Due to the distorted crystal structure of TiMCN, the diffusion of atoms is prevented during sintering. That is, it is presumed that TiMCN is likely to maintain the composition during sintering. As a result, the reaction of the second material to cBN particles 11 is presumably caused to facilitate.

TiNbCN, an example of the first material, is prepared by, for example, the following procedure. For example, a TiO₂ powder, an Nb₂O₃, and a carbon powder are mixed to thereby prepare a mixed powder. The mixing ratio is, for example, "TiO₂:Nb₂O₃:carbon = 65:17:18 (mass ratio)." For example, the mixed powder is heat-treated under a nitrogen atmosphere. The heat treatment temperature may be, for example, 1800°C or more and 2200°C or less. The heat treatment time may be, for example, about 60 minutes. This heat treatment may generate a single-phase compound of TiNbCN. Further, the average particle size of the single-phase compound is adjusted by, for example, the wet milling method.

### <<(B) Preparation of a raw material powder>>

In the present embodiment, a raw material powder is prepared by mixing cBN particles 11 and the binding material.

For example, cBN particles 11 and the binding material may be mixed by, for example, wet mixing. The medium for the wet mixing may be, for example, ethanol.

After mixing, degassing may be carried out. During degassing, for example, the raw material powder is heated to a temperature of 900°C or more under a vacuum atmosphere.

### <<(C) Sintering>>

In the present embodiment, the cBN sintered material is produced by sintering the raw material powder.

The degassed raw material powder is filled in a capsule. When the raw material powder is left in the air after degassed, the water and oxygen in the air may adsorb to the raw material powder. For this reason, it is desirable that the raw material power be quickly filled in a capsule after degassed.

The capsule may be, for example, a Ta capsule. The capsule is hermetically sealed by a metal sealing material. For the sintering operation, for example, a belt-type ultrahigh-pressure and high-temperature generator is used. The hermetically sealed capsule is set in the belt-type ultrahigh-pressure and high-temperature generator. The raw material powder is sintered in the belt-type ultrahigh-pressure and high-temperature generator. The pressure during sintering may be, for example, 5.5 GPa or more and 8 GPa or less. The temperature during sintering may be, for example, 1200°C or more and less than 1800°C. When a pressure during sintering is 6 GPa or more and 7 GPa or less and a temperature during sintering is 1400°C or more and 1600°C or less, for example, production costs and performances are in good balance.

### <Cutting tool>

The cutting tool of the present embodiment comprises the cBN sintered material of the present embodiment. In the cutting tool, the cBN sintered material functions as a cutting blade. The cutting tool may consist essentially of the cBN sintered material. The cutting tool may further include constituents other than the cBN sintered material. For example, the cutting tool may include a base metal made of a hard metal. The cBN sintered material may be arranged at the cutting edge of the base metal.

The cutting tool of the present embodiment may be a coated cutting tool. The coated cutting tool includes a covering film. The covering film covers at least a part of the surface of the cBN sintered material. The covering film includes, for example, a cemented carbide.

The shape of the cBN tool should not be particularly limited. The cBN tool may be, for example, an insert (for a drill, an end mill, a milling process, a lathe turning process and the like), a metal slitting saw, a gear cutting tool, a reamer, a tap, or a tool bit.

### EXAMPLE

Hereinafter, examples of the present disclosure (in the present description, also written as the "present example") will be described. However, the following descriptions do not intend to limit the scope of claims.

### <Production of the cBN sintered material>

Sample 1 to sample 20 shown in the following Table 1 were produced. Sample 11 to sample 17 are Examples. Sample 1 to 10 and Sample 18 to sample 20 are Comparative Examples.

### <<Sample 1>>

TiCN was prepared as the first material. TiCN had an average particle size of 0.6 µm.

A Ti powder, an Al powder, and a TiC powder were mixed to prepare a mixed powder. The mixing ratio is "Ti:Al:TiC = 39:20:41 (mass ratio)." The mixed powder was heat-treated. The heat treatment conditions are as follows.

### Heat treatment conditions

| Atmosphere | vacuum |
|---|---|
| Temperature | 1520°C |
| Time | 30 minutes |

A single-phase compound was formed by the heat treatment. This single-phase compound presumably has the composition of Ti₂AlC. The single-phase compound was crushed by the ball mill method. The second material was thus prepared. The second material had an average particle size of 0.6 µm.

The first material and the second material were mixed to prepare a binding material. The mixing ratio was "first material: second material = 1:3 (mass ratio)."

cBN particle was prepared. cBN particles had an average particle size of 2 µm. cBN particles and the binding material were mixed by a ball mill. A raw material powder was thus prepared. The mixing ratio was "cBN particles:binding material = 70:30 (volume ratio)."

The raw material powder was filled in a capsule. The capsule was a Ta capsule. The capsule was hermetically sealed by a metal sealing material. The hermetically sealed capsule was set in a belt-type ultrahigh-pressure and high-temperature generator. The raw material powder was sintered in the belt-type ultrahigh-pressure and high-temperature generator. The sintering conditions are as follows. As described above, the cBN sintered material of sample 1 was produced.

### Sintering conditions

| | |
|---|---|
| Pressure | 6.2 GPa |
| Temperature | 1550°C |
| Time | 15 minutes |

### <<Sample 2>>

In the production of sample 2, the mixing ratio of the first material and the second material during preparation of the binding material was changed to "first material: second material = 2:1 (mass ratio)." The cBN sintered material of sample 2 was produced by carrying out the same operation as sample 1 except this operation.

### <<Sample 3>>

In the production of sample 3, the mixing ratio of the first material and the second material during preparation of the binding material was changed to "first material: second material = 1:8 (mass ratio)." Further, in the production of sample 3, the mixing ratio of cBN particles and the binding material was "cBN particles:binding material = 80:20 (volume ratio)." The cBN sintered material of sample 3 was produced by carrying out the same operation as sample 1 except these operations.

### <<Sample 4>>

In the production of sample 4, the mixing ratio of cBN particles and the binding material was "cBN particles:binding material = 60:40 (volume ratio)." Further, in the production of sample 4, the temperature at sintering was set to 1570°C. The cBN sintered material of sample 4 was produced by carrying out the same operation as sample 1 except that the mixing ratio of cBN particles and the binding material, and the temperature at sintering were changed.

### <<Sample 5>>

In the production of sample 5, the mixing ratio of cBN particles and the binding material was "cBN particles:binding material = 73:27 (volume ratio)." Further, in the production of sample 5, the temperature at sintering was set to 1420°C. The cBN sintered material of sample 5 was produced by carrying out the same operation as sample 1 except that the mixing ratio of cBN particles and the binding material, and the temperature at sintering were changed.

### <<Sample 6>>

In the production of sample 6, the mixing ratio of the first material and the second material during preparation of the binding material was changed to "first material: second material = 1:2 (mass ratio)." Further, in the production of sample 6, the mixing ratio of cBN particles and the binding material was "cBN particles:binding material = 35:65 (volume ratio)." The cBN sintered material of sample 6 was produced by carrying out the same operation as sample 1 except that the mixing ratio of the first material and the second material, and the mixing ratio of cBN particles and the binding material were changed.

### <<Sample 7>>

In the production of sample 7, the mixing ratio of the first material and the second material during preparation of the binding material was changed to "first material: second material = 1:2 (mass ratio)." Further, in the production of sample 7, the mixing ratio of cBN particles and the binding material was "cBN particles:binding material = 20:80 (volume ratio)." The cBN sintered material of sample 7 was produced by carrying out the same operation as sample 1 except that the mixing ratio of the first material and the second material, and the mixing ratio of cBN particles and the binding material were changed.

### <<Sample 8>>

In the production of sample 8, the mixing ratio of the first material and the second material during preparation of the binding material was changed to "first material: second material = 1:2 (mass ratio)." Further, in the production of sample 8, the mixing ratio of cBN particles and the binding material was "cBN particles:binding material = 80:20 (volume ratio)." The cBN sintered material of sample 8 was produced by carrying out the same operation as sample 1 except that the mixing ratio of the first material and the second material, and the mixing ratio of cBN particles and the binding material were changed.

### <<Sample 9>>

In the production of sample 9, the mixing ratio of the first material and the second material during preparation of the binding material was changed to "first material: second material = 1:2 (mass ratio)." The cBN sintered material of sample 9 was produced by carrying out the same operation as sample 1 except this operation.

### <<Sample 10>>

In the production of sample 10, the mixing ratio of the first material and the second material during preparation of the binding material was changed to "first material: second material = 1:4 (mass ratio)." The cBN sintered material of sample 10 was produced by carrying out the same operation as sample 1 except this operation.

### <<Sample 11>>

In the production of sample 11, TiNbCN was used as the first material. The first material was prepared by the following procedure. A TiO₂ powder, an Nb₂O₃ powder, and a carbon powder were mixed to thereby prepare a mixed powder. The mixing ratio was "TiO₂:Nb₂O₃:carbon = 57:17:26 (mass ratio)." This mixed powder was heat-treated. The heat treatment conditions are as follows.

### Heat treatment conditions

| | |
|---|---|
| Atmosphere | nitrogen |
| Temperature | 2200°C |
| Time | 60 minutes |

A single-phase compound was formed by the heat treatment. The single-phase compound was crushed by the wet milling method. Due to this, the first material was prepared. The first material had an average particle size of 0.5 µm.

Further, in the production of sample 11, the mixing ratio of cBN particles and the binding material was "cBN particles:binding material = 60:40 (volume ratio)." The cBN sintered material of sample 11 was produced by carrying out the same operation as sample 1 except that the composition of the first material, and the mixing ratio of cBN particles and the binding material were changed.

### <<Sample 12>>

In the production of sample 12, ZrO₂ was used in place of Nb₂O₃. That is, the mixing ratio of the mixed powder was "TiO₂:ZrO₂:carbon = 58:16:26 (mass ratio)." The cBN sintered material of sample 12 was produced by carrying out the same operation as sample 11 except that the composition of the first material was changed.

### <<Sample 13>>

In the production of sample 13, MoO₃ was used in place of Nb₂O₃. That is, the mixing ratio of the mixed powder was "TiO₂: MoO₃:carbon = 56:18:26 (mass ratio)." The cBN sintered material of sample 13 was produced by carrying out the same operation as sample 11 except that the composition of the first material was changed.

### <<Sample 14>>

In the production of sample 14, Nb₂O₃ and ZrO₂ were used. That is, the mixing ratio of the mixed powder was "TiO₂: Nb₂O₃: ZrOz:carbon = 57:8.5:8.5:26 (mass ratio)." The cBN sintered material of sample 14 was produced by carrying out the same operation as sample 11 except that the composition of the first material was changed.

### <<Sample 15>>

In the production of sample 15, HfO₂ was used in place of Nb₂O₃. That is, the mixing ratio of the mixed powder was "TiO₂:HfO₂:carbon = 53:24:23 (mass ratio)." The cBN sintered material of sample 15 was produced by carrying out the same operation as sample 11 except that the composition of the first material was changed.

### <<Sample 16>>

In the production of sample 16, Ta₂O₅ was used in place of Nb₂O₃. That is, the mixing ratio of the mixed powder was "TiO₂:Ta₂O₅:carbon = 52:25:23 (mass ratio)." The cBN sintered material of sample 16 was produced by carrying out the same operation as sample 11 except that the composition of the first material was changed.

### <<Sample 17>>

In the production of sample 17, WO₃ was used in place of Nb₂O₃. That is, the mixing ratio of the mixed powder was "TiO₂:WO₃:carbon = 52:26:22 (mass ratio)." The cBN sintered material of sample 17 was produced by carrying out the same operation as sample 11 except that the composition of the first material was changed.

### <<Sample 18>>

In the production of sample 18, the mixing ratio of the cBN particles to the binding material was "cBN particles: binding material = 10:90 (volume ratio)." The cBN sintered material of sample 18 was produced by carrying out the same operation as sample 1 except that the mixing ratio of cBN particles and the binding material was changed.

### <<Sample 19>>

In the production of sample 19, the mixing ratio of cBN particles and the binding material was "cBN particles:binding material = 90:10 (volume ratio)." The cBN sintered material of sample 19 was produced by carrying out the same operation as sample 1 except that the mixing ratio of cBN particles and the binding material was changed.

### <<Sample 20>>

The cBN sintered material of sample 20 was produced by carrying out the same operation as sample 1 except that Ti₂AlN was used as the binding material.

### <Evaluation>

Qualitative analysis specified the composition of binding phase12. The results are shown in the following Table 1. Of the components included in binding phase12, the components other than TiB₂ and (TiM)B₂ were identified by XRD. TiB₂ and (TiM)B₂ were identified by using XRD and EDX in combination. This is because the discrimination of borides including Ti (TiB₂ and the like) from AlB₂ was difficult in the XRD patterns. The verification of the XRD patterns and the results of EDX identified TiB₂ and (TiM)B₂.

The "(TiM)B₂" herein refers to from (TiNb)B₂ to (TiW)B₂ in sample 11 to sample 17 of the following Table 1.

Further, by the method mentioned above, a volume percentage of the first region and an average value of the aspect ratios of needle crystals were measured. The results are shown in the following Table 1.

Each of the cBN sintered materials produced above was used to produce cBN tools, respectively. A cutting test of the cBN tools was carried out. The cutting test conditions are as follows.

### Tool Model Number

DNGA150412 (Cutting edge preparation S01225)

### Cutting conditions

| | |
|---|---|
| Cutting speed | 220 m/min |
| Feed rate | 0.1 mm/rev. |
| Notch | 0.2 mm |
| Coolant | DRY |
| Intermittent cutting | |

### Lathe

LB400 manufactured by Okuma Corporation

### Cutting target

Hardened steel SCM415 (carburized and hardened steel), hardness 60HRC, a V-shaped groove is formed around the outer circumference.

In the cutting test, the life of the cBN tools was measured. The results are shown in Table 1 below. The measurement procedure was as follows. Every cutting of 0.3 km was performed, the size of chippings at the cutting edge was measured. The size of chippings was defined as the size of a chip in the direction of the cutting force. The direction of the cutting force uses the position of the cutting edge ridgeline before starting the cutting as the reference. The distance at which the size of a chipping at the cutting edge was 0.1 mm or more was defined as the life.

### [Table 1]

**Table 1 Sample list**

| No. | cBN particles | Binding phase | | | Evaluation |
|---|---|---|---|---|---|
| | Percentage [vol%] | Composition* | First region (boride, needle crystals) | | Cutting test |
| | | | Percentage [vol%] | Average value of aspect ratios [-] | Life [km] |
| 1 | 70 | TiCN,TiB₂,AlN,Al₂O₃ | 6.4 | 5.2 | 1.7 |
| 2 | 70 | TiCN,AlN,Al₂O₃ | 1.0 | 5.4 | 1.5 |
| 3 | 80 | TiCN,TiB₂,AlN,Al₂O₃ | 30.0 | 5.1 | 1.3 |
| 4 | 60 | TiCN,TiB₂,AlN,Al₂O₃ | 7.5 | 3.0 | 1.9 |
| 5 | 73 | TiCN,TiB₂,AlN,Al₂O₃ | 7.8 | 10.0 | 1.8 |
| 6 | 35 | TiCN,TiB₂,AlN,Al₂O₃ | 7.3 | 6.4 | 1.5 |
| 7 | 20 | TiCN,TiB₂,AlN,Al₂O₃ | 6.3 | 5.5 | 1.1 |
| 8 | 80 | TiCN,TiB₂,AlN,Al₂O₃ | 6.5 | 5.3 | 1.3 |
| 9 | 70 | TiCN,TiB₂AlN,AlO₃ | 3.0 | 5.3 | 1.6 |
| 10 | 70 | TiCN,TiB₂,AlN,Al₂O₃ | 10.0 | 6.1 | 1.6 |
| 11 | 60 | TiNbCN, (TiNb)B₂,AlNAl₂O₃ | 5.9 | 6.1 | 2.6 |
| 12 | 60 | TiZrCN,(TiZr)B₂,AlN,Al₂O₃ | 5.8 | 6.3 | 2.3 |
| 13 | 60 | TiMoCN,(TiMo)B₂,AlN,Al₂O₃ | 6.2 | 5.7 | 2.1 |
| 14 | 60 | TiNbZrCN,(TiNbZr)B₂,AlN,Al₂O₃ | 5.6 | 5.4 | 2.4 |
| 15 | 60 | TiHfCN,(TiHf)B₂,AlN,Al₂O₃ | 5.3 | 5.0 | 2.2 |
| 16 | 60 | TiTaCN,(TiTa)B₂,AlN,Al₂O₃ | 5.1 | 6.4 | 2.0 |
| 17 | 60 | TiWCN,(TiW)B₂,AlN,Al₂O₃ | 6.7 | 5.8 | 1.6 |
| 18 | 10 | TiCN,TiB₂,AlN,Al₂O₃ | 6.2 | 4.8 | 0.2 |
| 19 | 90 | TiCN,TiB₂,AlN,Al₂O₃ | 6.3 | 4.7 | 0.3 |
| 20 | 70 | TiCN,TiB₂,AlN,Al₂O₃ | 0.8 | 5.6 | 0.5 |
| *Components other than TiB₂ and (TiM)B₂ were identified by XRD. TiB₂ and (TiM)B₂ were identified by using XRD and EDX in combination. | | | | | |

### <Results>

In sample 1 to sample 17, the lives are enhanced in the cutting test. It is presumed because needle crystals of borides are included in the binding phase. That is, it is presumed that needle crystals of borides prevent cracks from occurring and spreading while the cBN sintered material is intermittingly subject to impacts.

From sample 11 to sample 17, TiMCN is included in the binding phase. M is one or more selected from the group consisting of Zr, Nb, Mo, Hf, Ta, and W. When TiMCN is included in the binding phase, the lives tend to be longer in the cutting test. It is presumed that the solid solution of M in needle crystals of borides or the diffusion of M in needle crystals of borides strengths needle crystals of borides. When M is Nb, the lives are particularly longer.

### [Another aspect, which is not claimed]

A cubic boron nitride sintered material comprising cubic boron nitride particles and a binding phase,
wherein the cubic boron nitride particles account for 20 vol% or more and 80 vol% or less in the cubic boron nitride sintered material,
the binding phase accounts for the balance of the cubic boron nitride particles in the cubic boron nitride sintered material,
the binding phase includes a first region and a second region,
the first region accounts for 1.0 vol% or more in the binding phase,
the second region accounts for the balance of the first region in the binding phase,
the second region includes one or more components,
the components included in the second region include one or more selected from the group consisting of compounds and solid solutions,
each of the compounds and the solid solutions includes a first element and a second element,
the first element is one or more selected from the group consisting of nitrogen, carbon, boron, and oxygen,
the second element is one or more selected from the group consisting of Group 4 elements, Group 5 elements, Group 6 elements, and aluminum in the periodic table,
the first region includes a plurality of needle crystals,
each of the plurality of needle crystals includes a boride, and
each of the plurality of needle crystals has an aspect ratio of 1.5 or more in a cross-section image of the cubic boron nitride sintered material.

The present embodiments and the present examples are examples in all aspects and should be considered as not restrictive. The scope of the present invention is defined by the claims but not by the present embodiments or the present examples, and all alterations within the scope of the claims are intended to be included.

### REFERENCE SIGNS LIST

1 First region, 2 second region, 11 cubic boron nitride (cBN) particles, 12 binding phase.

## Claims

1. A cubic boron nitride sintered material comprising cubic boron nitride particles and a binding phase,
wherein the cubic boron nitride particles account for 20 vol% or more and 80 vol% or less in the cubic boron nitride sintered material,
a volume percentage of the binding phase is, when the volume percentage of the cubic boron nitride sintered material is 100 vol%, a numerical value obtained by subtracting a volume percentage of the cubic boron nitride particles from the 100 vol%,
the binding phase includes a first region and a second region,
the first region accounts for 1.0 vol% or more in the binding phase,
a volume percentage of the second region is, when the volume percentage of the binding phase is 100 vol%, a numerical value obtained by subtracting a volume percentage of the first region from the 100 vol%,
the second region includes one or more components selected from the group consisting of compounds and solid solutions,
each of the compounds and the solid solutions includes a first element and a second element,
the first element includes carbon and optionally one or more selected from the group consisting of nitrogen, boron, and oxygen,
the second element is one or more selected from the group consisting of Group 4 elements, Group 5 elements, Group 6 elements, and aluminum in the periodic table, the first region includes a plurality of needle crystals,
each of the plurality of needle crystals includes a boride, and
each of the plurality of needle crystals has an aspect ratio of 1.5 or more in a cross-section image of the cubic boron nitride sintered material,
the boride included in the plurality of needle crystals includes titanium, and
the boride included in the plurality of needle crystals further includes one or more selected from the group consisting of zirconium, niobium, molybdenum, hafnium, tantalum, and tungsten.

2. The cubic boron nitride sintered material according to claim 1, wherein, in the plurality of needle crystals, an average value of the aspect ratios is 3.0 or more and 10.0 or less.

3. The cubic boron nitride sintered material according to claim 1 or claim 2, wherein, the first region accounts for 3 vol% or more and 10 vol% or less in the binding phase.

4. The cubic boron nitride sintered material according to any one of claim 1 to claim 3,
wherein the cubic boron nitride particles account for 35 vol% or more and less than 75 vol% in the cubic boron nitride sintered material.

5. A cutting tool comprising the cubic boron nitride sintered material according to any one of claim 1 to claim 4.

6. The cutting tool according to claim 5,
wherein the cutting tool is a coated cutting tool, and
the coated cutting tool includes a covering film,
wherein the covering film covers at least a part of the surface of the cubic boron nitride sintered material.

## Patentansprüche

1. Sinterwerkstoff aus kubischem Bornitrid, umfassend Partikel aus kubischem Bornitrid und eine Bindungsphase,
wobei die Partikel aus kubischem Bornitrid 20 Vol.-% oder mehr und 80 Vol.-% oder weniger im Sinterwerkstoff aus kubischem Bornitrid ausmachen,
ein Volumenprozentsatz der Bindephase, wenn der Volumenprozentsatz des Sinterwerkstoffs aus kubischem Bornitrid 100 Vol.-% beträgt, ein numerischer Wert ist, der durch Subtraktion eines Volumenprozentsatzes der Partikel aus kubischem Bornitrid von den 100 Vol.-% erhalten wird,
die Bindephase einen ersten Bereich und einen zweiten Bereich umfasst,
der erste Bereich 1,0 Vol.-% oder mehr in der Bindephase ausmacht,
ein Volumenprozentsatz des zweiten Bereichs, wenn der Volumenprozentsatz der Bindephase 100 Vol.-% beträgt, ein numerischer Wert ist, der durch Subtraktion eines Volumenprozentsatzes des ersten Bereichs von den 100 Vol.-% erhalten wird,
der zweite Bereich eine oder mehrere Komponenten umfasst, die aus der Gruppe bestehend aus Verbindungen und festen Lösungen ausgewählt sind,
jede der Verbindungen und festen Lösungen ein erstes und ein zweites Element umfasst,
das erste Element Kohlenstoff und optional ein oder mehrere Elemente, ausgewählt aus der Gruppe bestehend aus Stickstoff, Bor und Sauerstoff, umfasst,
das zweite Element eines oder mehrere ist, das aus der Gruppe ausgewählt sind, die aus Gruppe-4-Elementen, Gruppe-5-Elementen, Gruppe-6-Elementen und Aluminium im Periodensystem besteht, der erste Bereich eine Vielzahl von Nadelkristallen umfasst, jeder der Vielzahl von Nadelkristallen ein Borid umfasst und jeder der Vielzahl von Nadelkristallen ein Seitenverhältnis von 1,5 oder mehr in einem Querschnittsbild des Sinterwerkstoffs aus kubischem Bornitrid aufweist,
das in der Vielzahl der Nadelkristalle enthaltene Borid Titan umfasst und das in der Vielzahl der Nadelkristalle enthaltene Borid ferner eines oder mehrere Elemente aus der Gruppe bestehend aus Zirconium, Niob, Molybdän, Hafnium, Tantal und Wolfram umfasst.

2. Sinterwerkstoff aus kubischem Bornitrid nach Anspruch 1, wobei in der Vielzahl von Nadelkristallen ein Durchschnittswert der Seitenverhältnisse 3,0 oder mehr und 10,0 oder weniger beträgt.

3. Sinterwerkstoff aus kubischem Bornitrid nach Anspruch 1 oder Anspruch 2, wobei der erste Bereich 3 Vol.-% oder mehr und 10 Vol.-% oder weniger in der Bindephase ausmacht.

4. Sinterwerkstoff aus kubischem Bornitrid nach einem der Ansprüche 1 bis 3,
wobei die Partikel aus kubischem Bornitrid 35 Vol.-% oder mehr und weniger als 75 Vol.-% im Sinterwerkstoff aus kubischem Bornitrid ausmachen.

5. Schneidwerkzeug, umfassend den Sinterwerkstoff aus kubischem Bornitrid nach einem der Ansprüche 1 bis 4,

6. Schneidwerkzeug nach Anspruch 5,
wobei das Schneidwerkzeug ein beschichtetes Schneidwerkzeug ist, und
das beschichtete Schneidwerkzeug eine Abdeckfolie umfasst,
wobei die Abdeckfolie wenigstens einen Teil der Fläche des Sinterwerkstoffs aus kubischem Bornitrid abdeckt.

## Revendications

1. Matériau fritté en nitrure de bore cubique comprenant des particules de nitrure de bore cubique et une phase liante,
dans lequel les particules de nitrure de bore cubique représentent 20 % en volume ou plus et 80 % en volume ou moins du matériau fritté en nitrure de bore cubique,
le pourcentage en volume de la phase liante, quand le pourcentage en volume du matériau fritté en nitrure de bore cubique est de 100 % en volume, est une valeur numérique obtenue en soustrayant le pourcentage en volume des particules de nitrure de bore cubique des 100 % en volume,
la phase liante inclut une première région et une deuxième région,
la première région représente 1,0 % en volume ou plus de la phase liante,
le pourcentage en volume de la deuxième région, quand le pourcentage en volume de la phase liante est de 100 % en volume, est une valeur numérique obtenue en soustrayant le pourcentage en volume de la première région des 100 % en volume,
la deuxième région inclut un ou plusieurs composants choisis dans le groupe constitué par les composés et les solutions solides,
chacun des composés et des solutions solides inclut un premier élément et un deuxième élément,
le premier élément inclut le carbone et éventuellement un ou plusieurs choisis dans le groupe constitué par l'azote, le bore et l'oxygène,
le deuxième élément est un ou plusieurs choisis dans le groupe constitué par les éléments du Groupe 4, les éléments du Groupe 5, les éléments du Groupe 6 du Tableau Périodique, et l'aluminium,
la première région inclut une pluralité de cristaux aciculaires,
chacun parmi la pluralité de cristaux aciculaires inclut un borure, et
chacun parmi la pluralité de cristaux aciculaires a un rapport d'aspect de 1,5 ou plus dans une image en coupe transversale du matériau fritté en nitrure de bore cubique,
le borure inclus dans la pluralité de cristaux aciculaires inclut du titane, et
le borure inclus dans la pluralité de cristaux aciculaires inclut en outre un ou plusieurs choisis dans le groupe constitué par le zirconium, le niobium, le molybdène, le hafnium, le tantale, et le tungstène.

2. Matériau fritté en nitrure de bore cubique selon la revendication 1, dans lequel, dans la pluralité de cristaux aciculaires, la valeur moyenne des rapports d'aspect est de 3,0 ou plus et 10,0 ou moins.

3. Matériau fritté en nitrure de bore cubique selon la revendication 1 ou la revendication 2, dans lequel la première région représente 3 % en volume ou plus et 10 % en volume ou moins de la phase liante.

4. Matériau fritté en nitrure de bore cubique selon l'une quelconque des revendications 1 à 3,
dans lequel les particules de nitrure de bore cubique représentent 35 % en volume ou plus et moins de 75 % en volume du matériau fritté en nitrure de bore cubique.

5. Outil de coupe comprenant le matériau fritté en nitrure de bore cubique selon l'une quelconque des revendications 1 à 4.

6. Outil de coupe selon la revendication 5,
dans lequel l'outil de coupe est un outil de coupe revêtu, et
l'outil de coupe revêtu inclut un film de recouvrement,
dans lequel le film de recouvrement couvre au moins une partie de la surface du matériau fritté en nitrure de bore cubique.
